# EUROPÄISCHE PATENTSCHRIFT

(11) **EP 1 407 153 B1**
(45) Veröffentlichungstag und Bekanntmachung des Hinweises auf die Patenterteilung: **17.08.2005**
(21) Anmeldenummer: 02754234.9
(22) Anmeldetag: 19.06.2002
(51) Int. Cl.: F16C 11/06

(54) **KUGELGELENK MIT INTEGRIERTEM WINKELSENSOR**
BALL JOINT WITH INTEGRATED ANGLE SENSOR
ARTICULATION A ROTULE COMPORTANT UN CAPTEUR ANGULAIRE INTEGRE

(30) Priorität: 18.07.2001 DE 10134259
(43) Veröffentlichungstag der Anmeldung: 14.04.2004
(73) Patentinhaber: ZF Lemförder Metallwaren AG, 49441 Lemförde (DE)
(72) Erfinder: KRUSE, Jochen, 49088 Osnabrück (DE)
(86) Internationale Anmeldenummer: PCT/DE2002/002245
(87) Internationale Veröffentlichungsnummer: WO 2003/008819

(56) Entgegenhaltungen:
- EP-A- 0 617 260
- WO-A-01/57639
- US-A- 4 500 867
- PATENT ABSTRACTS OF JAPAN vol. 2000, no. 01, 31. Januar 2000 (2000-01-31) & JP 11 271014 A (KAWASAKI HEAVY IND LTD), 5. Oktober 1999 (1999-10-05)

## Beschreibung

Die Erfindung betrifft ein Kugelgelenk für ein Kraftfahrzeug, insbesondere für das Fahrwerk des Kraftfahrzeuges, mit einem mit einer Gelenköffnung versehenen Kugelgelenkgehäuse, einem eine Gelenkkugel und einen Zapfen aufweisenden Kugelzapfen, welcher mit seiner Gelenkkugel drehbar und schwenkbar in einer hohlkugelförmigen Lagerfläche in dem Kugelgelenkgehäuse gelagert ist und mit seinem Zapfen durch die Gelenköffnung hindurch aus dem Kugelgelenkgehäuse herausragt und einem an dem Zapfen abgewandten Ende der Gelenkkugel vorgesehenen zweipoligen Feldgeber, dessen Pole an der Kugeloberfläche angeordnet sind.

Ein derartiges Kugelgelenk ist aus der EP 0 617 260 B1 bekannt, wobei als Feldgeber ein Permanentmagnet an der Kugel angeordnet ist. In dem dem Magneten im unausgelenkten Zustand des Kugelzapfens unmittelbar gegenüberliegenden Bereich des Gehäuses ist ein magnetoresistiver Sensor derart angeordnet, dass dieser mit dem von dem Permanentmagneten erzeugten magnetischen Feld in Wechselwirkung steht. Mit Hilfe des magnetoresistiven Sensors kann eine Drehung des unausgelenkten Kugelzapfens um seine Längsachse erfasst werden, wobei der erfasste Winkel zum Beispiel zur Leuchtweitenregulierung im Kraftfahrzeug verwendet werden kann.

Ein derartiges Kugelgelenk hat den Nachteil, dass Schwenkbewegungen des Kugelzapfens nur mit unzureichender Genauigkeit erfasst werden können. Dabei wird unter Schwenken eine Bewegung verstanden, bei welcher der Kugelzapfen die räumliche Lage seiner Symmetrieachse bzw. Mittelachse gegenüber dem Kugelgelenkgehäuse verändert.

Aufgabe der Erfindung ist es, ein Kugelgelenk für ein Kraftfahrzeug zu schaffen, bei welchem der Schwenkwinkel in zumindest einer Schwenkrichtung mit großer Genauigkeit erfasst werden kann.

Diese Aufgabe wird durch ein Kugelgelenk für ein Kraftfahrzeug mit den Merkmalen nach Anspruch 1 gelöst. Bevorzugte Weiterbildungen sind in den Unteransprüchen beschrieben.

Das erfindungsgemäße Kugelgelenk für ein Kraftfahrzeug, insbesondere für das Fahrwerk des Kraftfahrzeugs weist ein mit einer Gelenköffnung versehenes Kugelgelenkgehäuse, einen eine Gelenkkugel und einen Zapfen aufweisenden Kugelzapfen, der mit seiner Gelenkkugel drehbar und schwenkbar in einer hohlkugelförmigen Lagerfläche in dem Kugelgelenkgehäuse gelagert ist und mit seinem Zapfen durch die Gelenköffnung hindurch aus dem Kugelgelenkgehäuse herausragt und einen in dem dem Zapfen abgewandten Ende der Gelenkkugel vorgesehenen zweipoligen Feldgeber auf, dessen Pole an bzw. im Bereich der Kugeloberfläche angeordnet sind. Dabei sind wenigstens zwei Feldsensoren hinsichtlich der durch den senkrecht zur Lagerlängsachse verlaufenden Großkreis auf der hohlkugelförmigen Lagerfläche oder auf der Gelenkkugel definierten Meridianebene in dem der Gelenköffnung abgewandten Bereich in oder an dem Kugelgelenkgehäuse im Abstand zueinander angeordnet und stehen mit dem von dem Feldgeber erzeugten Feld in Wechselwirkung.

Über die Anordnung der beiden Feldsensoren in oder an dem Kugelgelenkgehäuse, kann der über die Feldsensoren erfassbare räumliche Schwenkbereich des Kugelzapfens eingestellt werden. Bevorzugt liegen dabei die beiden Feldsensoren hinsichtlich der Längsachse des Kugelgelenkgehäuses einander diametral gegenüber. Durch diese Anordnung ist die Genauigkeit des erfassbaren Schwenkwinkels hinsichtlich einer Schwenkbewegung um die zu der Verbindungslinie beider Feldsensoren und zu der Längsachse des Kugelgelenkgehäuses senkrecht verlaufenden Schwenkachse besonders groß.

Dadurch, dass die beiden unterschiedlichen Pole des Feldgebers an bzw. im Bereich der Kugeloberfläche angeordnet sind, ist nicht nur ein Verschwenken sondern auch ein Verdrehen des Kugelzapfens um seine Mittelsachse von den Feldsensoren erfassbar.

Bei Kugelgelenken, deren Kugelzapfen vornehmlich nur um eine einzige Schwenkachse geschwenkt werden, sind zwei Feldsensoren zum Erfassen des Schwenkwinkels ausreichend. Wird der Kugelzapfen aber zusätzlich um eine andere als diese einzige Schwenkachse geschwenkt, kann die Bestimmung der genauen räumlichen Position des Kugelzapfen gegenüber dem Kugelgelenkgehäuse mit unerwünschten Ungenauigkeiten verknüpft sein.

Bevorzugt ist deshalb an dem erfindungsgemäßen Kugelgelenk ein dritter Feldsensor vorgesehen, der hinsichtlich der Meridianebene in dem der Gelenköffnung abgewandten Bereich in oder an dem Kugelgelenkgehäuse im Abstand zu den beiden anderen Feldsensoren und mit diesen nicht auf einer Geraden liegend angeordnet ist und mit dem von dem Feldgeber erzeugten Feld in Wechselwirkung steht. Nach dieser Weiterbildung ist es möglich, eine beliebige räumliche Position des Kugelzapfens gegenüber dem Kugelgelenkgehäuse genau zu erfassen.

Die Position jedes Feldsensors in dem Kugelgelenkgehäuse kann von dem zu erfassenden Schwenkbereich des Kugelzapfens abhängig gemacht werden. Bevorzugt sind die Feldsensoren jedoch derart angeordnet, dass hinsichtlich des von den drei Feldsensoren definierten Kreises zwei benachbarte der Feldsensoren jeweils einen Kreissektor mit einem Zentriwinkel von 120 ° definieren, wobei der Mittelpunkt dieses zu der Meridianebene parallel verlaufenden Kreises auf Längsachse des Kugelgelenkgehäuses liegt. Gemäß dieser Weiterbildung sind die Feldsensoren gleichmäßig rings der Gelenkkugel verteilt angeordnet, so dass ein besonders großer Raumbereich von den Feldsensoren überwacht werden kann.

In Abhängigkeit von den verwendeten Feldsensoren kann es vorkommen, dass die räumliche Position des Kugelzapfens gegenüber dem Kugelgelenkgehäuse nicht mehr eindeutig erfassbar ist, wenn der Feldgeber in dem Bereich zwischen dem von den Feldsensoren definierten Kreis und der Meridianebene liegt. Bevorzugt sind die Sensoren deshalb derart angeordnet, dass eine durch einen der Sensoren und den Mittelpunkt der Hohlkugel oder der Gelenkkugel verlaufende Gerade mit der Längsachse des Kugelgelenkgehäuses mindestens den gleichen Winkel einschließt wie die Mittelachse des Kugelzapfens mit der Längsachse des Kugelgelenkgehäuses bei durch von dem Kugelgelenkgehäuse begrenzter Maximalauslenkung des Kugelzapfens. Mit einer derartigen Sensoranordnung ist eine Winkelerfassung über den gesamten Schwenkbereich des Kugelzapfens möglich.

Der Feldgeber kann in Form eines elektrischen Dipols ausgebildet sein, wobei die Feldsensoren zum Erfassen des von dem Dipol ausgehenden Feldes ausgelegt sind. Eine derartige Anordnung hat den Nachteil, dass zur Aufrechterhaltung des elektrischen Feldes eine Energieversorgung zu dem Feldgeber sichergestellt sein muss. Bevorzugt sind deshalb der Feldgeber als Permanentmagnet und die Feldsensoren als Magnetfeldsensoren ausgebildet, die ein das erfasste Magnetfeld des Permanentmagneten charakterisierendes elektrisches Signal an eine Auswerteeinrichtung abgeben können, wobei die Magnetfeldsensoren durch herkömmliche Magnetsensoren, wie zum Beispiel durch Hall-Effekt-Sensoren oder durch magnetoresistive Sensoren gebildet sein können. Für den Permanentmagneten ist keine Energieversorgung erforderlich, so dass eine elektrische Kontaktierung des Gelenkzapfens oder das Einsetzen einer Batterie in den Gelenkzapfen zum Betreiben des erfindungsgemäßen Kugelgelenks nicht benötigt wird. Ferner wird das Magnetfeld durch das häufig in Kugelgelenken verwendete Fett so gut wie nicht beeinflusst.

Der Permanentmagnet kann aus allgemein bekannten Dauermagnetwerkstoffen wie zum Beispiel aus Alniko 500 oder aus Bariumferrit hergestellt sein. Bevorzugt ist der Permanentmagnet aber aus Werkstoffen mit einem hohen Gütefaktor (B H)ₘₐₓ wie SmCo₅, Sm₂Co₁₇, Nd₂Fe₁₄B oder ähnlichen Werkstoffen hergestellt.

Falls das Kugelgelenkgehäuse und/oder der Kugelzapfen aus einem ferromagnetischen Material hergestellt sind, kann die Messung des von dem Permanentmagneten hervorgerufenen Magnetfeldes mittels der Magnetfeldsensoren durch dieses Material ungünstig beeinflusst werden. Bevorzugt sind daher das Kugelgelenkgehäuse und/oder der Kugelzapfen aus einem diamagnetischen oder aus einem paramagnetischen Werkstoff hergestellt.

Die Gelenkkugel kann unmittelbar in dem Kugelgelenkgehäuse gelagert sein. Es ist aber auch möglich, die Gelenkkugel unter Zwischenschaltung einer Lagerschale aus einem nicht-ferromagnetischen Werkstoff wie zum Beispiel Kunststoff oder Keramik in dem Kugelgelenkgehäuse zu lagern.

Die Erfindung wird nachfolgend anhand einer bevorzugten Ausfamgsform unter Bezugnahme auf die Zeichnung beschrieben.

In der Zeichnung zeigen:
- Figur 1: eine teilweise geschnittene Ansicht eines Kugelzapfens einer Ausführungsform des erfindungsgemäßen Kugelgelenks und
- Figur 2: das Kugelgelenk gemäß der Ausführungsform nach Figur 1 mit einem teilweise aufgeschnittenem Gehäuse.

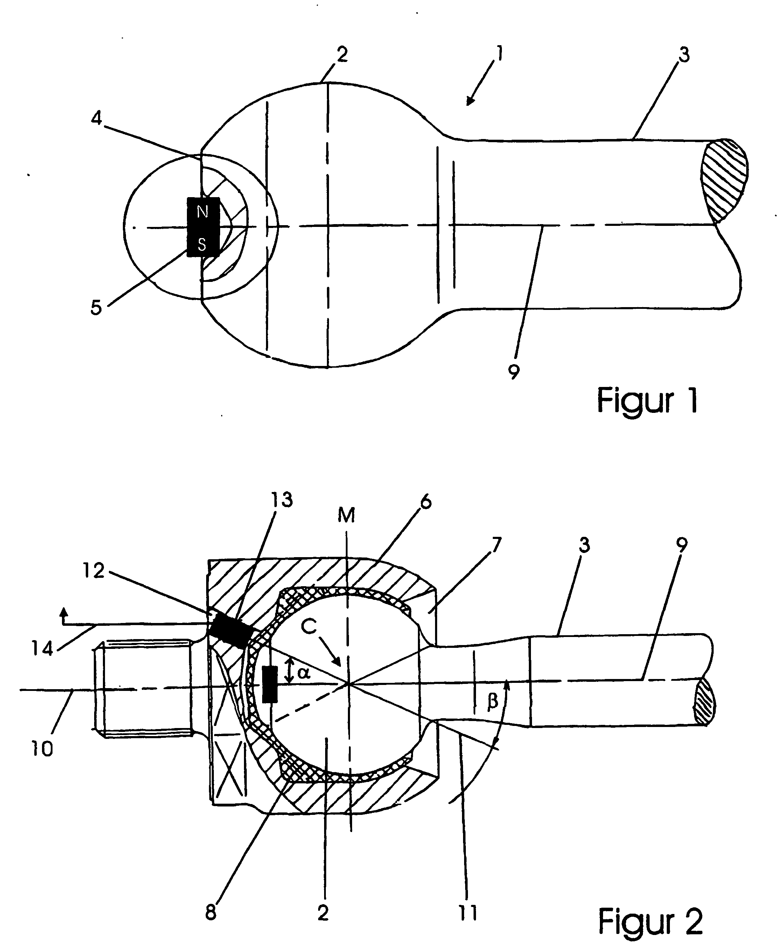

Aus der Figur 1 ist ein Kugelzapfen 1 nach einer Ausführungsform des erfindungsgemäßen Kugelgelenks ersichtlich, welcher eine Gelenkkugel 2 und einen Zapfen 3 aufweist. Die Gelenkkugel 2 weist an ihrem dem Zapfen 3 abgewandten Ende einen abgeflachten Bereich 4 auf, in dessen Mitte ein Permanentmagnet 5 in einer in der Gelenkkugel 2 vorgesehenen Ausnehmung befestigt ist, wobei in der Figur der Nordpol des Permanentmagneten 5 mit dem Buchstaben "N" und der Südpol des Permanentmagneten 5 mit dem Buchstaben "S" bezeichnet ist. Der Permanentmagnet 5 ist dabei mit seinen beiden Polen N und S an der Oberfläche des abgeflachten Bereichs derart angeordnet, dass diese den gleichen Abstand zum Mittelpunkt der Gelenkkugel 2 aufweisen.

Aus der Figur 2 ist die Ausführungsform des erfindungsgemäßen Kugelgelenks im zusammengebauten Zustand ersichtlich, wobei der Kugelzapfen 1 in einem Kugelgelenkgehäuse 6 schwenkbar gelagert ist. Der Kugelzapfen 1 ragt dabei mit seinem Zapfen 3 aus einer in dem teilweise geschnitten dargestellten Kugelgelenkgehäuse 6 vorgesehenen Gelenköffnung 7 heraus und ist mit seiner Gelenkkugel 2 unter Zwischenschaltung einer aus Kunststoff hergestellten Lagerschale 8 in dem Kugelgelenkgehäuse 6 gelagert. In diesem Fall ist die zur Lagerung der Gelenkkugel 2 erforderliche hohlkugelförmige Lagerfläche von der Innenfläche der Lagerschale 8 gebildet, wobei der Mittelpunkt C der Gelenkkugel 2 mit dem Mittelpunkt der hohlkugelförmigen Lagerfläche zusammenfällt.

Nach der Figur 2 ist der Kugelzapfen 1 in einer nicht ausgelenkten Position dargestellt, so dass die Mittelachse 9 des Kugelzapfens 1 mit der Längsachse 10 des Kugelgelenks zusammenfällt. Die Auslenkung des Kugelzapfens 1 gegenüber dem Kugelgelenkgehäuse 6 ist durch den von dem Kugelgelenkgehäuse 6 gebildeten Rand der Gelenköffnung 7 begrenzt, wobei die maximal mögliche Auslenkung des Kugelzapfens 1 in der Figur durch die Gerade 11 und den Winkel β angedeutet ist. Die Gerade 11 charakterisiert dabei eine Position der Mittelachse 9 des Kugelzapfens 1 bei maximaler Auslenkung.

In dem Kugelgelenkgehäuse 6 sind drei Ausnehmungen 12 vorgesehen, von welchen nur eine aus der Figur ersichtlich ist. In jeder dieser Ausnehmungen ist ein Magnetfeldsensor 13 eingebracht, der gemäß der Ausführungsform als Hall-Sensor ausgebildet ist. Die Sensoren 13 sind auf einem parallel zur Meridianebene M verlaufenden Kreis derart angeordnet, dessen Mittelpunkt auf der Lagerlängsachse 10 liegt, dass zwei benachbarte der Sensoren 13 zusammen mit dem Mittelpunkt dieses Kreises jeweils ein Kreissegment mit einem Zentriwinkel von 120° definieren. Ferner sind die Sensoren 13 auf den Mittelpunkt C der Gelenkkugel 2 hin ausgerichtet, wobei die ausgezeichnete Erfassungsrichtung (Haupterfassungsrichtung) eines jeden der Sensoren 13 mit der Längsachse 10 des Kugelgelenks einen Winkel α einschließt. Da gemäß der Ausführungsfonn α = β gilt, wobei β die maximale Auslenkung des Kugelzapfens charakterisiert, liegt die Haupterfassungsrichtung für den in der Figur dargestellten Sensor 13 somit auf der Geraden 11.

Wird der Kugelzapfen geschwenkt, so wird der Permanentmagnet 5 mitgeschwenkt, was eine Änderung des von dem Permanentmagneten 5 hervorgerufenen Magnetfeldes in dem Erfassungsbereich der Sensoren 13 verursacht. Diese Veränderung des Magnetfeldes kann von den Sensoren 13 erfasst werden, die das erfasste Magnetfeld charakterisierende elektrische Signale über elektrische Leitungen 14 an eine Auswerteeinrichtung (nicht gezeigt) abgeben, von welcher dann unter Auswertung dieser elektrischen Signale die räumliche Position des Kugelzapfens 1 relativ zum Kugelgelenkgehäuse 6 bestimmt wird. In der Figur ist an einem Ende der elektrischen Leitungen 14 eine Pfeilspitze vorgesehen, welche den Anschluss der elektrischen Leitungen 14 an die Auswerteeinheit symbolisiert.

Die räumliche Position des Kugelzapfens 1 relativ zu dem Kugelgelenkgehäuse 6 kann nun zum Beispiel durch die Angabe von zwei Schwenkwinkeln und einem Drehwinkel charakterisiert werden, wobei der Drehwinkel die Verdrehung des Kugelzapfens 1 um seine Längsachse 9 angibt. Die beiden Schwenkwinkel geben jeweils einen zwischen der Mittelachse 9 des Kugelzapfens 1 und der Längsachse 10 des Kugelgelenks eingeschlossenen Winkel an, wobei diese beiden Schwenkwinkel nicht in derselben Ebenen liegen. Bevorzugt liegen diese beiden Schwenkwinkel aber in Ebenen, die sich unter einem rechten Winkel schneiden. Damit kann in einfacher Weise das Verkippen des Kugelzapfens in ein Verschwenken in Querrichtung und in ein Verschwenken in Längsrichtung aufgegliedert werden.

Da die Position des Kugelzapfens 1 im Raum eindeutig bestimmbar ist, kann somit auch die Lage der über das Kugelgelenk unmittelbar oder mittelbar verbundenen Teile zueinander bestimmt werden. Ist das Kugelgelenk im Fahrwerk eines Kraftfahrzeugs angeordnet, so können zum Beispiel die Radstellung, der Lenkausschlag oder die Einfederung bestimmt werden. Dabei kann das Kugelgelenk zum Beispiel als Traggelenk oder als Führungsgelenk eingesetzt werden. Ferner ist es möglich, die von den Sensoren 13 abgegebenen elektrischen Signale zum Steuern einer Niveauregulierung zu verwenden.

### Bezugszeichenliste:

- 1: Kugelzapfen
- 2: Gelenkkugel
- 3: Zapfen
- 4: abgeflachter Bereich
- 5: Permanentmagnet
- 6: Kugelgelenkgehäuse
- 7: Gelenköffnung
- 8: Lagerschale
- 9: Mittelachse des Kugelzapfens
- 10: Längsachse des Kugelgelenks
- 11: Gerade für maximal möglich Auslenkung
- 12: Ausnehmungen für die Sensoren
- 13: Sensoren
- 14: elektrische Leitungen
- M: Meridianebene
- C: Mittelpunkt der Gelenkkugel
- α: Winkel zwischen der Haupterfassungsrichtung der Sensoren und der Längsachse des Kugelgelenks
- β: Winkel zwischen der Geraden für maximale Auslenkung und der Längsachse des Kugelgelenks

## Patentansprüche

1. Kugelgelenk für ein Kraftfahrzeug, insbesondere für das Fahrwerk des Kraftfahrzeugs, mit einem mit einer Gelenköffnung (7) versehenen Kugelgelenkgehäuse (6), einem eine Gelenkkugel (2) und einen Zapfen (3) aufweisenden Kugelzapfen (1), welcher mit seiner Gelenkkugel (2) drehbar und schwenkbar in einer hohlkugelförmigen Lagerfläche in dem Kugelgelenkgehäuse (6) gelagert ist und mit seinem Zapfen (3) durch die Gelenköffnung (7) hindurch aus dem Kugelgelenkgehäuse (6) herausragt, und einem an dem dem Zapfen (3) abgewandten Ende der Gelenkkugel (2) vorgesehenen zweipoligen Feldgeber (5), dessen Pole an der Kugeloberfläche angeordnet sind, **dadurch gekennzeichnet, dass** wenigstens zwei Feldsensoren (13) hinsichtlich der durch den senkrecht zur Lagerlängsachse (10) verlaufenden Großkreis auf der hohlkugelförmigen Lagerfläche definierten Meridianebene (M) in dem der Gelenköffnung (7) abgewandten Bereich in oder an dem Kugelgelenkgehäuse (6) im Abstand zueinander angeordnet sind und mit dem von dem Feldgeber (5) erzeugten Feld in Wechselwirkung stehen.

2. Kugelgelenk nach Anspruch 1, **dadurch gekennzeichnet, dass** ein dritter Feldsensor (13) hinsichtlich der Meridianebene (M) in dem der Gelenköffnung (7) abgewandten Bereich in oder an dem Kugelgelenkgehäuse (6) im Abstand zu den beiden anderen Feldsensoren (13) und mit diesen nicht auf einer Graden liegend angeordnet ist und mit dem von dem Feldgeber (5) erzeugten Feld in Wechselwirkung steht.

3. Kugelgelenk nach Anspruch 2, **dadurch gekennzeichnet, dass** hinsichtlich des von den drei Feldsensoren (13) definierten Kreises zwei benachbarte der Feldsensoren (13) zusammen mit dem Mittelpunkt des Kreises jeweils einen Kreissektor mit einem Zentriwinkel von 120° definieren, wobei der Mittelpunkt dieses zu der Meridianebene (M) parallel verlaufenden Kreises auf der Längsachse (10) des Kugelgelenkgehäuses (6) liegt.

4. Kugelgelenk nach einem der Ansprüche 1 bis 3, **dadurch gekennzeichnet, dass** eine durch einen der Sensoren (13) und den Mittelpunkt (C) der Hohlkugel verlaufende Gerade (11) mit der Längsachse (10) des Kugelgelenkgehäuses (6) einen Winkel (α) einschließt, der größer oder gleich dem von der Mittelachse (9) des Kugelzapfens (1) mit der Längsachse (10) des Kugelgelenkgehäuses (6) bei durch von dem Kugelgelenkgehäuse (6) begrenzter Maximalauslenkung des Kugelzapfens (1) eingeschlossenen Winkel (β) ist.

5. Kugelgelenk nach einem der Ansprüche 1 bis 4, **dadurch gekennzeichnet, dass** der Feldgeber als Permanentmagnet (5) und die Feldsensoren als Magnetfeldsensoren (13) ausgebildet sind, die ein das Magnetfeld des Permanentmagneten (5) charakterisierendes elektrisches Signal an eine Auswerteeinrichtung abgeben.

6. Kugelgelenk nach Anspruch 5, **dadurch gekennzeichnet, dass** der Permanentmagnet (5) aus SmCo₅, Sm₂Co₁₇ oder Nd₂Fe₁₄B hergestellt ist.

7. Kugelgelenk nach Anspruch 6, **dadurch gekennzeichnet, dass** das Kugelgelenkgehäuse (6) aus einem paramagnetischen Werkstoff hergestellt ist.

## Claims

1. A ball joint for a motor vehicle, in particular for the chassis of the motor vehicle, with a ball-joint socket (6) provided with a joint aperture (7), with a ball journal (1) exhibiting a joint ball (2) and a journal (3), which ball journal is supported by its joint ball (2) so as to be capable of rotating and pivoting in a bearing surface of hollow spherical form in the ball-joint socket (6) and which protrudes from the ball-joint socket (6) with its journal (3) through the joint aperture (7), and with a bipolar field generator (5) provided at the end of the joint ball (2) facing away from the journal (3), the poles of which are arranged on the surface of the ball, **characterised in that** at least two field sensors (13) are arranged in or on the ball-joint socket (6) spaced from one another in the region facing away from the joint aperture (7) with respect to the meridian plane (M) defined by the great circle extending perpendicular to the longitudinal axis (10) of the bearing on the bearing surface of hollow spherical form and interact with the field generated by the field generator (5).

2. Ball joint according to Claim 1, **characterised in that** a third field sensor (13) is arranged in or on the ball-joint socket (6) spaced from the two other field sensors (13) with respect to the meridian plane (M) in the region facing away from the joint aperture (7) and not lying on a straight line with said sensors and interacts with the field generated by the field generator (5).

3. Ball joint according to Claim 2, **characterised in that** with respect to the circle defined by the three field sensors (13) each two adjacent field sensors (13) define together with the midpoint of the circle a sector of a circle with a centre angle of 120°, the midpoint of this circle which extends parallel to the meridian plane (M) being situated on the longitudinal axis (10) of the ball-joint socket (6).

4. Ball joint according to one of Claims 1 to 3, **characterised in that** a straight line (11) extending through one of the sensors (13) and through the midpoint (C) of the hollow ball includes with the longitudinal axis (10) of the ball-joint socket (6) an angle (α) that is greater than or equal to the angle (β) included by the central axis (9) of the ball journal (1) with the longitudinal axis (10) of the ball-joint socket (6) at maximal deflection of the ball journal (1) limited by the ball-joint socket (6).

5. Ball joint according to one of Claims 1 to 4, **characterised in that** the field generator takes the form of a permanent magnet (5) and the field sensors take the form of magnetic-field sensors (13) which transmit an electrical signal characterising the magnetic field of the permanent magnet (5) to an evaluating device.

6. Ball joint according to Claim 5, **characterised in that** the permanent magnet (5) is produced from SmCo₅, Sm₂Co₁₇ or Nd₂Fe₁₄B.

7. Ball joint according to Claim 6, **characterised in that** the ball-joint socket (6) is produced from a paramagnetic material.

## Revendications

1. Joint à rotule pour un véhicule automobile, en particulier pour le châssis du véhicule automobile, comportant un boîtier (6) du joint à rotule pourvu d'une ouverture pour joint (7), un pivot à rotule (1) comportant une rotule de joint (2) et un pivot (3) et qui est monté tournant et pivotant par sa rotule de joint (2) dans une surface d'appui en forme de sphère creuse dans le boîtier (6) du joint à rotule, et dépasse, par son pivot (3) du boîtier (6) du joint à rotule à travers l'ouverture pour joint (7), et comportant un transmetteur de champ (5) bipolaire prévu à l'extrémité, tournée à l'opposé du pivot (3), de la rotule du joint (2), dont les pôles sont disposés sur la surface de la rotule, **caractérisé en ce qu'**au moins deux capteurs de champ (13) sont disposés à distance l'un de l'autre, par rapport au plan méridien (M) défini par le grand cercle s'étendant perpendiculairement à l'axe longitudinal d'appui (10), sur la surface d'appui en forme de sphère creuse, dans la zone tournée à l'opposé de l'ouverture pour joint (7), dans ou sur le boîtier (6) du joint à rotule, et sont en interaction avec le champ produit par le transmetteur de champ (5).

2. Joint à rotule selon la revendication 1, **caractérisé en ce qu'**un troisième capteur de champ (13) est disposé, par rapport au plan méridien (M), dans la zone tournée à l'opposé de l'ouverture pour joint (7), dans ou sur le boîtier (6) du joint à rotule, à distance des deux autres capteurs de champ (13) et ne se trouve pas avec ceux-ci sur une droite, et est en interaction avec le champ produit par le transmetteur de champ (5).

3. Joint à rotule selon la revendication 2, **caractérisé en ce que** par rapport au cercle défini par les trois capteurs de champ (13), deux des capteurs de champ (13) voisins définissent avec le centre du cercle respectivement un secteur de cercle avec un angle au centre de 120°, le centre de ce cercle s'étendant parallèlement au plan méridien (M), se situant sur l'axe longitudinal (10) du boîtier (6) du joint à rotule.

4. Joint à rotule selon l'une des revendications 1 à 3, **caractérisé en ce qu'**une droite (11), passant par l'un des capteurs (13) et le centre (C) de la sphère creuse, forme avec l'axe longitudinal (10) du boîtier (6) du joint à rotule, un angle (α) qui est supérieur ou égal à l'angle (β) formé par l'axe médian (9) du pivot de rotule (1) avec l'axe longitudinal (10) du boîtier (6) du joint à rotule, pour la déviation maximale du pivot de rotule (1), limitée par le boîtier (6) du joint à rotule.

5. Joint à rotule selon l'une des revendications 1 à 4, **caractérisé en ce que** le transmetteur de champ est réalisé comme aimant permanent (5) et les capteurs de champ comme capteurs de champ magnétique (13) qui délivrent un signal électrique, caractérisant le champ magnétique de l'aimant (5), à un dispositif d'exploitation.

6. Joint à rotule selon la revendication 5, **caractérisé en ce que** l'aimant permanent (5) est réalisé en SmCo₅, Sm₂Co₁₇ ou Nd₂Fe₁₄B.

7. Joint à rotule selon la revendication 6, **caractérisé en ce que** le boîtier (6) du joint à rotule est fabriqué dans un matériau paramagnétique.
